(19) **Europäisches Patentamt / European Patent Office / Office européen des brevets**

(11) **EP 4 383 838 B1**

(12) **FASCICULE DE BREVET EUROPEEN**

(45) Date de publication et mention de la délivrance du brevet:
**25.06.2025 Bulletin 2025/26**

(51) Classification Internationale des Brevets (IPC):
**H04W 52/02** *(2009.01)* **G06F 1/32** *(2019.01)*

(21) Numéro de dépôt: **23214537.5**

(52) Classification Coopérative des Brevets (CPC):
**H04W 52/0209**

(22) Date de dépôt: **06.12.2023**

(54) **PROCÉDÉ COMMANDE D ÉMISSION DE SIGNAUX RADIO AUTO-ADAPTATIF**

**VERFAHREN ZUR STEUERUNG DER ÜBERTRAGUNG VON SELBSTANPASSENDEN FUNKSIGNALEN**

**METHOD FOR CONTROLLING SELF-ADAPTIVE TRANSMISSION OF RADIO SIGNALS**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.12.2022 FR 2212828**

(43) Date de publication de la demande:
**12.06.2024 Bulletin 2024/24**

(73) Titulaire: **SAGEMCOM ENERGY & TELECOM SAS**
**92270 Bois-Colombes (FR)**

(72) Inventeurs:
- **ABID, Oussama**
  **92270 BOIS-COLOMBES (FR)**
- **SABRAOUI, Abbas**
  **92270 BOIS-COLOMBES (FR)**
- **BASTURK, Ahmet Samed**
  **92270 BOIS-COLOMBES (FR)**

(74) Mandataire: **Regimbeau**
**20, rue de Chazelles**
**75847 Paris Cedex 17 (FR)**

(56) Documents cités:
US-A- 6 023 475     US-A1- 2005 018 638
US-A1- 2006 270 385

## Description

### DOMAINE DE L'INVENTION

La présente invention concerne un procédé pour émettre des signaux radio transportant des données utiles.

### ETAT DE LA TECHNIQUE

On connait de l'état de la technique des dispositifs destinés à transmettre périodiquement des données utiles à un équipement distant, tels que des compteurs d'eau.

Certains de ces dispositifs sont alimentés en énergie par une batterie stockant une quantité d'énergie limitée. A chaque fois qu'un signal transportant des données utiles est émis par un tel dispositif, de l'énergie est consommée dans la batterie. Lorsque la batterie est vide, le dispositif ne peut plus fonctionner, et, en particulier, ne peut plus envoyer de données utiles.

Il convient de noter que la quantité d'énergie consommée pour émettre un signal transportant des données utiles varie en fonction du lieu d'installation du dispositif. En effet, la couverture réseau du dispositif dépend du lieu d'installation. Par exemple, si la couverture réseau est mauvaise, le dispositif peut être amené à consommer un surplus d'énergie en répétant l'envoi de fragments ou en augmentant une puissance d'émission.

En conséquence, les batteries respectives de deux dispositifs identiques placés dans des lieux différents peuvent se vider à des vitesses différentes. En conséquence, les durées de vie effectives de ces dispositifs peuvent être parfois très différentes, ce qui n'est pas souhaitable.

Le document US 2006/270385 décrit un procédé dans lequel un cycle de service de transmission est modifié lorsqu'un coût énergétique estimé descend en dessous d'un seuil.

### EXPOSE DE L'INVENTION

Un but de l'invention est de remédier à cette situation.

Il est à cet effet proposé, selon un premier aspect, un procédé comprenant les étapes exposées dans la revendication 1.

Le procédé selon le premier aspect peut également comprendre les caractéristiques suivantes, prises seules ou en combinaison lorsque cela est techniquement possible.

De préférence, le premier facteur et le deuxième coefficient sont égaux.

De préférence, le procédé selon le premier aspect comprend en outre une étape de calcul de la quantité d'énergie de référence à partir de la période mémorisée et d'une quantité d'énergie restante dans une batterie 6 de l'émetteur.

De préférence, la quantité d'énergie consommée pour émettre le premier signal ratio est estimée à partir d'une durée d'émission du premier signal et d'une puissance d'émission du premier signal.

De préférence, les données utiles comprennent au moins une mesure de consommation d'un fluide.

Il est également proposé, selon un deuxième aspect, un produit programme d'ordinateur comprenant des instructions de code de programme pour l'exécution des étapes du procédé selon le premier aspect, lorsque ce programme est exécuté par un émetteur.

Il est également proposé, selon un troisième aspect, une mémoire lisible par ordinateur stockant des instructions exécutables par l'ordinateur pour l'exécution des étapes du procédé selon le premier aspect.

Il est également proposé, selon un quatrième aspect, un émetteur comprenant une interface de communication radio, et une unité de commande configurée pour mettre en œuvre les étapes du procédé selon le premier aspect, de telle sorte que premier signal radio et le deuxième signal radio soient émis par l'interface de communication radio.

Il est également proposé, selon un cinquième aspect, un compteur pour mesurer une consommation de fluide, le compteur comprenant un émetteur selon le quatrième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un dispositif selon un mode de réalisation.
La figure 2 est un organigramme d'étapes d'un procédé selon un mode de réalisation.
La figure 3 représente l'évolution d'une quantité d'énergie consommée pour émettre un signal radio au cours du temps.

Sur l'ensemble des figures, les éléments similaires portent des références identiques.

## DESCRIPTION DETAILLEE DE L'INVENTION

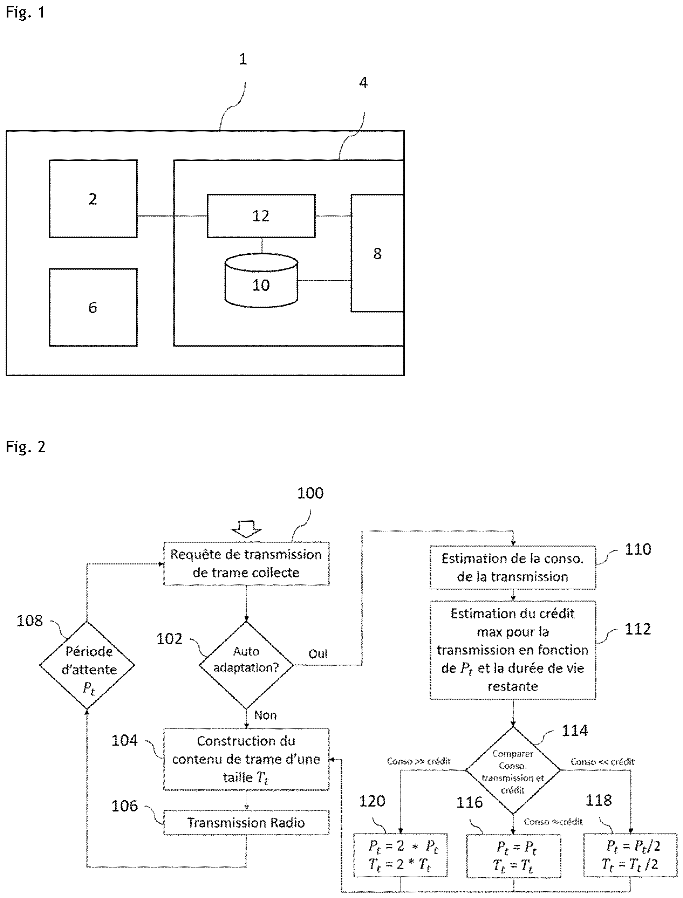

On a représenté en **figure 1** un dispositif 1. Le dispositif 1 est par exemple un compteur ayant pour fonction générale de mesurer une consommation de fluide, par exemple une consommation d'eau dans une installation.

Le dispositif 1 comprend un capteur 2, un émetteur 4 et une batterie 6.

Le capteur 2 est configuré pour acquérir des mesures indicatives d'une consommation de fluide dans l'installation.

L'émetteur 4 est configuré pour émettre des signaux radios de manière répétée dans le temps dans un réseau, de sorte que ces signaux radios soient reçus par un équipement distant.

Le réseau considéré est typiquement un réseau étendu à basse consommation (Low Power Wide Area Network ou LPWAN en anglais). Par exemple, le réseau LPWAN est l'un des suivants : SigFox, LoRaWAN, NB-IOT, CAT-M, WAZE, wMBUS.

La batterie 6 constitue une source d'énergie qui permet d'alimenter en énergie les autres composants du dispositif 1, en particulier l'émetteur 4. La batterie 6 stocke une quantité d'énergie limitée : cette quantité d'énergie stockée diminue au cours du temps, notamment à chaque fois que l'émetteur 4 émet un signal radio. La batterie 6 peut être rechargeable ou pas. La batterie 6 comprend par exemple une ou plusieurs piles électriques.

L'émetteur 4 comprend une interface de communication radio 8, une mémoire 10 et une unité de commande 12.

L'interface de communication radio 8 est adaptée pour générer les signaux radios précités. L'interface de communication radio 8 comprend une ou plusieurs antennes.

La mémoire 10 mémorise deux paramètres : une période d'émission Pt une taille de trame Tt. On verra dans la suite que ces deux paramètres ont respectivement une influence sur les instants d'émission et les longueurs des signaux radio émis par l'émetteur 4.

L'unité de commande 12 est configurée pour commander l'émission de signaux radios par l'interface de communication radio 8, de sorte à tenir compte des deux paramètres précités. En particulier, l'unité de commande 12 est capable de modifier les valeurs des deux paramètres Pt, Tt qui sont mémorisées dans la mémoire 10.

L'unité de commande 12 est en outre configurée pour générer des trames de données utiles destinées à être communiquées à un équipement distant. Les trames générées comprennent typiquement des mesures fournies par le capteur, ou des données qui en sont issues.

L'unité de commande 12 peut comprendre un ou plusieurs processeurs, programmable (FPGA par exemple) ou non (ASIC). Le ou chaque programme peut être adapté pour exécuter un programme de commande comprenant des instructions de code pour la mise en œuvre d'un procédé qui sera décrit par la suite. Le programme de commande est par exemple mémorisé dans la mémoire 10.

De manière générale, l'émetteur 4 est configurable dans deux modes de fonctionnement qui seront détaillés dans la suite : un mode de fonctionnement statique, et un mode de fonctionnement dynamique. Le mode de fonctionnement dans lequel l'émetteur 4 est configuré est par exemple indiqué dans une donnée mémorisée dans la mémoire 10, par exemple un booléen. L'émetteur 4 peut changer de mode de fonctionnement, typiquement sur réception d'une requête à cette effet reçue via l'interface de communication radio 8, et précédemment émise par un équipement distant.

En référence à la **figure 2,** un procédé mis en œuvre par l'émetteur 4 comprend les étapes suivantes.

Dans une étape 100, l'unité de commande 12 détecte qu'un signal radio est à émettre. On verra par la suite que cette détection repose sur un délai écoulé.

Dans une étape 102, l'unité de commande 12 détermine le mode de fonctionnement dans lequel l'émetteur 4 est configuré (statique ou dynamique). Selon le mode déterminé, différentes étapes sont mises en œuvre par l'unité de commande 12.

### Mode de fonctionnement statique

Lorsque le mode de fonctionnement de l'émetteur 4 est le mode statique, l'unité de commande 12 construit une trame contenant des données utiles (étape 104). L'unité de commande 12 impose comme contrainte que la trame construite ait une taille égale à la taille de trame Tt telle que mémorisée dans la mémoire 10.

Ensuite, l'interface de communication radio 8 émet un signal radio transportant la trame construite. Le signal radio est un signal temporel de durée limitée. L'émission du signal débute à un instant, et cesse à un instant ultérieur, l'intervalle entre ces deux instants constituant la durée du signal radio émis. Cette durée dépend de la taille de la trame construite.

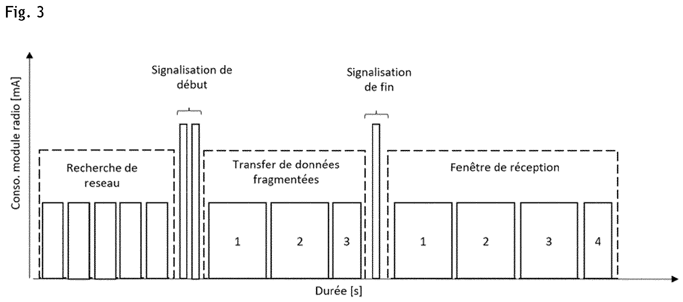

On a représenté en **figure 3** de manière schématique l'évolution de la quantité d'énergie consommée par l'émetteur 4 pour émettre le signal radio à l'étape 106 dans un réseau LPWAN. Ainsi, on distingue plusieurs phases :

- une phase de recherche de réseau : Cette phase est dominante dans les réseaux dits connectés (c'est-à-dire avec des signalisations échangées entre l'émetteur 4 et des équipements distants destinataires tels que des passerelles. Sa durée peut s'étaler entre quelques secondes à plusieurs minutes en fonction des bandes de fréquences à parcourir. Cette phase permet de :

  ○ déterminer une fréquence d'écoute du ou des équipements distants,
  ○ initier une configuration de canal dédiée pour l'émetteur 4
  ○ s'attacher au réseau.

- une phase de signalisation : Cette phase permet d'alerter sur un début ou fin d'une phase de transmission.
- Transfert de données : Selon les couches protocolaires impliqués, des mécanismes d'encapsulation et de fragmentation s'appliquent. Les données utiles sont transmises dans cette phase.
- Fenêtre de réception : En fonction du réseau, une ou plusieurs fenêtres de réceptions s'activent après une émission de données utiles.

Il est à noter que les phases qui constituent la session de transmission, leurs durées, fréquences et impact énergétiques varient d'une technologie à une autre mais dans l'ensemble, mais elles sont généralement présentes. Par exemple, dans un réseau NBIOT, la phase de recherche de réseau et les durées de transmission sont plus longue que dans un réseau CAT-M parce que la modulation de ce dernier permet des débits plus élevés. Par ailleurs, Les réseau LoRa et SigFox ont un débit très faible comparé aux autres technologies, ce qui rallonge les durées de transmission.

De retour à la figure 2, l'émetteur 4 se met ensuite en attente pendant une période égale à la période mémorisée dans la mémoire 10 (étape 108). Concrètement, l'unité de commande 12 démarre un compteur de temps à l'instant auquel l'interface de communication a commencé à émettre le signal radio, et attend. Lorsque le compteur de temps atteint une valeur égale à la période mémorisée dans la mémoire 10, la période d'attente est terminée, et le procédé retourne à l'étape 100.

En définitive, il est détecté qu'une nouvelle trame est à transmettre à l'étape 100 lorsqu'il s'est écoulé un délai égal à la période Tt à compter de l'instant où un précédent signal radio a été émis (plus précisément, l'instant auquel cette émission a démarré).

Sous l'hypothèse que le mode de fonctionnement de l'émetteur 4 n'a pas changé (mode statique), un nouveau signal radio est émis lors d'une nouvelle mise en œuvre de l'étape 104. Grâce au mécanisme qui précède, l'unité de commande 104 fait en sorte que :

- la durée qui sépare les émissions respectives de deux signaux radio consécutif est égale à la période Pt mémorisée par l'émetteur 4,
- les deux signaux radio consécutifs transportent des trames respectives ayant des tailles égales à la taille de trame Tt mémorisée par l'émetteur 4.

Les étapes qui précèdent sont répétées dans le temps.

Ainsi, tant que l'émetteur 4 est dans le mode de fonctionnement statique, l'émetteur 4 émet des signaux radios de manière périodique, en s'appuyant sur la période Pt mémorisée dans la mémoire 10. Par ailleurs, tous les signaux transportent la même quantité de données utiles, cette quantité étant dictée par la taille de trame mémorisée.

**Mode de fonctionnement dynamique**

On va maintenant décrire les étapes mises en œuvre par l'émetteur 4 lorsque l'unité de commande 12 constate à l'étape 102 que le mode de fonctionnement dans lequel l'émetteur 4 a été configuré est le mode dynamique. On va voir que dans le mode dynamique, une autoadaptation est mise en œuvre par l'émetteur.

On suppose que l'émetteur 4 a déjà émis au moins un signal radio par le passé. Par convention, on considère que le dernier signal radio émis est un signal radio d'indice k-1, et que la trame transportée par ce signal est une trame d'indice k-1.

Dans une étape 110, l'unité de commande 12 estime une quantité d'énergie consommée par l'émetteur 4 pour émettre le signal radio d'indice k-1. Cette estimation 110 peut être réalisée de différentes façons.

Dans un premier mode de réalisation, cette estimation 110 est réalisée à partir de la durée du signal d'indice k-1 et d'une puissance d'émission du signal radio d'indice k-1.

La durée du signal radio d'indice k-1 peut être calculée de la façon suivante :

$$Nb \ de \ fragments = Nb \ de \ répétition * Arrondi_{sup} \left[ \frac{Taille \ payload_{octets}}{Taille \ fragment_{octets}} \right]$$

$$Durée \ émission \ fragment = Nb \ de \ fragments * \left( \frac{Taille \ fragment_{octets}}{Débit_{octets/s}} \right)$$

*Nb de signalisation = signalisation$_{début}$ + (Nb de fragments * Nb de signalisation par fragment) + signalisation$_{fin}$*

*Durée émission totale = Nb de retransmissions * [Durée attachement + (Nb de fragments * Durée émission fragment) + (Nb de signalisation * Durée signalisation])*

Où :

- *Nb de répétition* est un nombre de fois qu'un fragment est transmis (paramètre dépends de la configuration réseau)
- *Taille payload$_{octets}$* est la taille des données utiles transportées par le signal ratio d'indice k-1 (ce paramètre correspond à la taille Tt discutée précédemment),
- *Taille fragment$_{octets}$* est la taille d'un paquet de couche basse (MAC),
- *Débit$_{octets/s}$* est un débit de transmission qui dépend de la qualité de signal, de la modulation etc.
- *Nb de signalisation* est un nombre de message de signalisations,
- Durée d'une signalisation est une valeur approximative récupérée du module radio,
- *Nb de fragments* est le nombre de fragments à transmettre,
- *Durée émission fragment* est la durée de transmission moyenne d'un fragment.

Une puissance d'émission du signal d'indice k-1 est mesurée par l'émetteur 4.

L'unité de commande 12 peut estimer à l'étape 110 une intensité de courant consommée à partir de la puissance d'émission du signal radio d'indice k-1. **Cette** estimation peut être réalisée à partir d'une table de conversion mémorisée dans la mémoire 10, cette table associant des valeurs de puissance, par exemple exprimées en dBm, à des valeurs d'intensité de courant, par exemple exprimées en milliampères (mA).

La table 1 ci-dessous constitue un exemple de table de conversion utilisable :

[table 1]

| Puissance (dBm) | Courant |
|---|---|
| 0 | 30 mA |
| 1 | 32 mA |
| 2 | 35 mA |
| 3 | 40 mA |
| 4 | 52 mA |
| ... | |
| 18 | 120 mA |
| 19 | 140 mA |
| 20 | 160 mA |

Ensuite, l'unité de commande 12 peut estimer la quantité d'énergie consommée en multipliant l'intensité de courant déterminée par la durée d'émission du signal radio d'indice k-1. Dans ce cas, la quantité d'énergie consommée estimée peut s'exprimer en mAh.

Dans un deuxième mode de réalisation, l'estimation de l'étape 110 est réalisée à partir de mesures de courant réelles acquise par un appareil adéquat. L'estimée pourrait être plus précise qu'avec le premier mode de réalisation, mais l'incorporation de l'appareil représente un surcout de fabrication.

Dans une étape 112, l'unité de commande 12 obtient une quantité d'énergie de référence. Cette étape peut être réalisée de différences façons.

Dans un premier mode de réalisation, la quantité d'énergie de référence est une quantité déterminée à l'avance et mémorisée dans la mémoire 10. Cette quantité est déterminée en fonction d'une durée de vie désirée pour l'émetteur 4, et de la quantité d'énergie maximale pouvant être stockée dans la batterie 6.

Dans un deuxième mode de réalisation, la quantité d'énergie de référence est calculée par l'unité de commande 12, notamment à partir de la période mémorisée dans la mémoire 10. On va voir dans ce qui suit que, dans le mode de fonctionnement dynamique, la période mémorisée peut varier dans le temps ; ceci entraîne également une variation de la quantité d'énergie de référence dans le temps.

Plus précisément, la quantité d'énergie de référence peut être calculée comme suit

$$Crédit_{mAh} = \frac{Capacité_{mAh}}{Durée\ vie_{jours} * Nb\ transmissions_{/jour}}$$

où :

- $Capacité_{mAh}$ désigne une quantité d'énergie restante dans la batterie 6,
- $Durée\ vie_{jours}$ est le nombre de jours restants durant lesquels l'émetteur 4 est censé fonctionner avant que la batterie 6 ne soit vide,
- $Nb\ transmissions_{/jour}$ est le nombre de signaux à émettre par jour (en appliquant la période mémorisée).

La quantité d'énergie de référence représente ainsi une quantité maximale allouable pour la transmission d'un signal pour que la batterie puisse fonctionner le nombre de jours indiqués.

Dans une étape 114, l'unité de commande 12 compare la quantité d'énergie consommée pour émettre le signal radio k-1, ayant été estimée à l'étape 110, et la quantité d'énergie de référence obtenue à l'étape 112. On va voir que l'unité de commande 12 va décider de mettre à jour ou non les paramètres Pt, Tt mémorisés dans la mémoire 10 (taille de trame et/ou période d'émission) en fonction de la comparaison.

L'unité de commande 12 calcule un écart entre ces deux quantités d'énergie. Le seuil est en valeur absolue. L'unité de commande 12 compare l'écart avec un seuil prédéfini. Ce seuil est de préférence strictement supérieur à zéro.

Lorsque l'écart est inférieur au seuil, alors les paramètres mémorisés dans la mémoire 10 (taille de trame et période d'émission) ne sont pas modifiés (étape 116.

Lorsque l'écart est supérieur ou égal au seuil, alors les paramètres mémorisés dans la mémoire 10 (taille de trame Tt et période d'émission Pt) sont modifiés (étapes 118, 120).

Ces modifications diffèrent selon que la quantité d'énergie consommée estimée est inférieure ou non à la quantité d'énergie de référence.

Lorsque l'écart est supérieur ou égal au seuil et qu'en plus la quantité d'énergie estimée est inférieure à la quantité d'énergie de référence, alors l'unité de commande 12 réduit la période mémorisée et/ou réduit la taille de trame mémorisée, de préférence les deux (étape 118).

Préférentiellement, la période mémorisée est réduite à l'étape 118 d'un premier facteur, et la taille mémorisée est réduite du même premier facteur. Dans le présent texte « réduire X d'un facteur Y » désigne une opération prenant en entrée X et produisant un résultat égal à X multiplié par un facteur multiplicatif Y, Y étant strictement supérieur à 1. Utiliser le même facteur pour modifier (ici augmenter) la période Pt et la taille de trame Tt permet de maintenir la quantité de données utiles transmise par l'émetteur 4 à très long terme.

Par exemple, lorsque le premier facteur est choisi égal à 2, les réductions sont réalisées comme suit :

$$Pt = \frac{Pt}{2}$$

$$Tt = \frac{Tt}{2}$$

Lorsque l'écart est supérieur ou égal au seuil et qu'en plus la quantité d'énergie estimée est supérieure à la quantité d'énergie de référence, alors l'unité de commande 12 augmente la période mémorisée et/ou augmente la taille de trame mémorisée, de préférence les deux (étape 120).

Préférentiellement, la période mémorisée est augmentée à l'étape 120 d'un deuxième facteur, et la taille mémorisée est augmentée du deuxième facteur. Dans le présent texte « augmenter X d'un facteur Y » désigne une opération prenant en entrée X et produisant un résultat égal à X multiplié par un facteur Y, Y étant strictement inférieur à 1. Dit autrement, « augmenter X d'un facteur Y » revient à « réduire X d'un facteur 1/Y ».

Par exemple, lorsque le deuxième facteur est choisi égal à 2, les augmentations sont réalisées comme suit :

$$Pt = 2 * Pt$$

$$Tt = 2 * Tt$$

Très préférentiellement, le premier facteur et le deuxième facteur sont égaux (comme dans l'exemple présenté ci-dessus). Ceci permet de préserver un certain équilibre entre les différentes façons de modifier les deux paramètres précités, et éviter une dérive à long terme des valeurs des paramètres Pt, Tt. Toutefois, les deux facteurs pourraient être différents.

Ensuite, l'unité de commande 12 met en œuvre l'étape 104 pour construire une nouvelle trame, d'indice k. Comme indiqué précédemment, l'unité de commande 12 se fonde sur la valeur de la taille Tt telle que présente dans la mémoire 10 pour faire en sorte que la trame d'indice k ait une taille égale à la taille Tt mémorisé. Si la taille de trame a été mise à jour lors de l'étape 118 ou l'étape 120, alors c'est bien cette taille mise à jour qui est utilisée à ce stade. Ainsi, on voit que la trame d'indice k peut avoir une taille égale, supérieure ou inférieure à celle de la trame d'indice k-1, selon de la décision prise par l'unité de commande à l'étape 114.

Ensuite, l'étape 106 d'émission est mise en œuvre comme indiqué précédemment, de sorte à émettre un nouveau signal radio transportant cette nouvelle trame.

Ensuite, l'étape 108 d'attente est mise en œuvre, sur la base de la période Pt telle que mémorisée dans la mémoire 10, ayant dont potentiellement été mise à jour à l'étape 118 ou l'étape 120. Ainsi, la durée qui sépare les émissions respectives du signal radio d'indice k et d'un signal radio suivant d'indice k+1 sera, selon le cas, être égale, supérieure ou inférieure à la durée qui sépare les émissions respectives du signal radio d'indice k-1 et du signal radio d'indice k.

Les inventeurs ont constaté que répartir une quantité de données utiles dans plusieurs signaux radio espacés dans le temps consomme plus d'énergie que de transmettre en une fois cette quantité dans un seuil signal radio plus long, sous l'hypothèse que tous les autres paramètres utilisés par l'émetteur sont identiques (modulation choisie, puissance de signal, etc.). Dans l'exemple de la figure 3, ceci provient du fait que l'émetteur 4 doit réaliser la phase de recherche de réseau et la phase de fenêtre de réception, quelle que soit la quantité de données utile transmise dans le signal radio entre ces deux phases. En contrepartie, répartir une quantité de données utiles dans plusieurs signaux radio espacés permet au dispositif 1 d'être plus réactif.

Ainsi, la mise en œuvre de l'étape 120 permet de faire en sorte que la quantité d'énergie qui sera consommée pour émettre le signal radio k soit inférieure à la quantité d'énergie consomme pour émettre le signal radio k-1. Par ailleurs, la mise en œuvre de l'étape 118 permet de rentre le dispositif plus réactif. En effet, le dispositif 1 devra attendre moins longtemps à l'étape 108 pour émettre le signal suivant. Le mode dynamique décrit précédemment est avantageux, car il permet à l'émetteur de trouver un compromis intéressant entre réactivité et consommation d'énergie, et ce de manière évolutive dans le temps.

Le procédé décrit précédemment en relation avec la figure 2 peut faire l'objet de variantes.

- En particulier, on notera que ce procédé permet au dispositif 1 de changer de mode de fonctionnement (statique ou dynamique). Il peut être envisagé que le dispositif 1 ne fonctionne qu'en mode dynamique.
- Par ailleurs, le premier facteur et le deuxième facteur peuvent être modifiés, par exemple sur requête d'un équipement distant.
- L'unité de traitement 12 peut maintenir les paramètres Pt et Tt dans des plages de valeurs prédéfinies. Ainsi, la période Pt ou la taille Tt peut être réduite à l'étape 118 à condition de ne pas franchir une valeur minimale ; similairement, la période Pt ou la taille Tt peut être augmentée à l'étape 120 à condition de ne pas franchir une valeur maximale. A titre d'exemple, l'unité de commande peut imposer une période minimale de 24 heures (autrement l'envoi d'une trame par jour) et/ou une taille de trame qui reste comprise entre 64 et 256 octets.

**Revendications**

1. Procédé comprenant les étapes suivantes mises en œuvre par un émetteur :

   • commande d'émission (106) d'un premier signal radio transportant une première trame de données utiles, de sorte que :

      • la durée qui sépare l'émission du premier signal radio et l'émission d'un précédent signal radio par l'émetteur est égale à une période, Pt, mémorisée par l'émetteur, et
      • la première trame de données utiles a une taille égale à une taille, Tt, mémorisée par l'émetteur,

• estimation (110) d'une quantité d'énergie consommée par l'émetteur pour émettre le première signal radio,
• comparaison (114) entre la quantité d'énergie consommée et une quantité d'énergie de référence,
• mise à jour (118, 120) de la période, Pt, mémorisée et de la taille mémorisée, Tt, à condition qu'un écart entre la quantité d'énergie estimée et la quantité d'énergie de référence soit supérieure à un seuil prédéfini,
• après la mise à jour, commande d'émission (106) d'un deuxième signal radio transportant une deuxième trame de données utiles, de sorte que :

    • la durée qui sépare l'émission du deuxième signal radio et l'émission du premier signal radio par l'émetteur est égale à la période mémorisée, et
    • la deuxième trame de données utiles a une taille égale à la taille, Tt, mémorisée,

• **caractérisé en ce que** :

    • lorsque l'écart est supérieur au seuil et que la quantité d'énergie consommée estimée est inférieure à la quantité d'énergie de référence, la période mémorisée est réduite d'un premier facteur et la taille mémorisée est réduite du premier facteur, ou
    • lorsque l'écart est supérieur au seuil et que la quantité d'énergie estimée est supérieure à la quantité d'énergie de référence, la période mémorisée est augmentée d'un deuxième facteur et la taille mémorisée est augmentée du deuxième facteur .

2. Procédé selon la 1, dans lequel le premier facteur et le deuxième coefficient sont égaux.

3. Procédé selon l'une quelconque des revendications 1 à 2, comprenant en outre une étape de calcul (112) de la quantité d'énergie de référence à partir de la période mémorisée et d'une quantité d'énergie restante dans une batterie de l'émetteur.

4. Procédé selon l'une quelconque des revendications 1 à 3, dans lequel la quantité d'énergie consommée pour émettre le premier signal ratio est estimée (112) à partir d'une durée d'émission du premier signal et d'une puissance d'émission du premier signal.

5. Produit programme d'ordinateur comprenant des instructions de code de programme pour l'exécution des étapes du procédé selon l'une des revendications 1 à 4, lorsque ce programme est exécuté par un émetteur (4).

6. Mémoire (10) lisible par ordinateur stockant des instructions exécutables par l'ordinateur pour l'exécution des étapes du procédé selon l'une des revendications 1 à 4.

7. Emetteur (4) comprenant :

    • une interface de communication radio (8),
    • une unité de commande (12) configurée pour mettre en œuvre les étapes du procédé selon l'une quelconques des revendications 1 à 4, de telle sorte que premier signal radio et le deuxième signal radio soient émis par l'interface de communication radio (8).

8. Compteur (1) pour mesurer une consommation de fluide, le compteur (1) comprenant un émetteur (4) selon la revendication 7, dans lequel les données utiles comprennent au moins une mesure de consommation d'un fluide.

**Patentansprüche**

1. Verfahren, das die folgenden Schritte umfasst, die von einem Sender durchgeführt werden:

    • Befehl zum Senden (106) eines ersten Funksignals, das einen ersten Nutzdatenframe transportiert, so dass:

        • die Zeit, die das Senden des ersten Funksignals und das Senden eines vorherigen Funksignals durch den Sender trennt, gleich einer vom Sender gespeicherten Periode Pt ist, und
        • der erste Nutzdatenframe eine Größe hat, die gleich einer vom Sender gespeicherten Größe Tt ist,

    • Schätzen (110) einer vom Sender zum Senden des ersten Funksignals verbrauchten Energiemenge,

# EP 4 383 838 B1

• Vergleichen (114) zwischen der verbrauchten Energiemenge und einer Referenzenergiemenge,
• Aktualisieren (118, 120) der gespeicherten Periode Pt und der gespeicherten Größe Tt, sofern eine Abweichung zwischen der geschätzten Energiemenge und der Referenzenergiemenge größer als ein vordefinierter Schwellenwert ist,
• nach der Aktualisierung Befehl zum Senden (106) eines zweiten Funksignals, dass einen zweiten Nutzdatenframe transportiert, so dass:

• die Zeit, die das Senden des zweiten Funksignals und das Senden des ersten Funksignals durch den Sender trennt, gleich der gespeicherten Periode ist, und
• der zweite Nutzdatenframe eine Größe hat, die gleich der gespeicherten Größe Tt ist,

• **dadurch gekennzeichnet, dass**:

• wenn die Abweichung größer als der Schwellenwert ist und die geschätzte verbrauchte Energiemenge kleiner als die Referenzenergiemenge ist, die gespeicherte Periode um einen ersten Faktor verringert wird und die gespeicherte Größe um den ersten Faktor verringert wird, oder
• wenn die Abweichung größer als der Schwellenwert ist und die geschätzte Energiemenge größer als die Referenzenergiemenge ist, die gespeicherte Periode um einen zweiten Faktor erhöht wird und die gespeicherte Größe um den zweiten Faktor erhöht wird.

2. Verfahren nach Anspruch 1, wobei der erste Faktor und der zweite Faktor gleich sind.

3. Verfahren nach einem der Ansprüche 1 bis 2, das ferner einen Schritt des Berechnens (112) der Referenzenergiemenge ausgehend von der gespeicherten Periode und einer Restenergiemenge in einer Batterie des Senders umfasst.

4. Verfahren nach einem der Ansprüche 1 bis 3, wobei die zum Senden des ersten Signalverhältnisses verbrauchte Energiemenge ausgehend von einer Sendedauer des ersten Signals und einer Sendeleistung des ersten Signals geschätzt (112) wird.

5. Rechnerprogrammprodukt, das Programmcodeanweisungen zur Ausführung der Schritte des Verfahrens nach einem der Ansprüche 1 bis 4 umfasst, wenn dieses Programm von einem Sender (4) ausgeführt wird.

6. Rechnerlesbarer Speicher (10), der vom Rechner ausführbare Anweisungen zur Ausführung der Schritte des Verfahrens nach einem der Ansprüche 1 bis 4 speichert.

7. Sender (4), umfassend:

• eine Funkkommunikationsschnittstelle (8),
• eine Steuereinheit (12), die ausgelegt ist, um die Schritte des Verfahrens nach einem der Ansprüche 1 bis 4 auszuführen, so dass das erste Funksignal und das zweite Funksignal von der Funkkommunikationsschnittstelle (8) gesendet werden.

8. Zähler (1) zum Messen eines Fluidverbrauchs, wobei der Zähler (1) einen Sender (4) nach Anspruch 7 umfasst, wobei die Nutzdaten mindestens eine Verbrauchsmessung eines Fluids umfassen.

**Claims**

1. A method implemented by a transmitter, comprising:

• causing a transmission (106) of a first radio signal carrying a first payload data frame, such that:

• a time interval separating the transmission of the first radio signal and a transmission of a preceding radio signal by the transmitter is equal to a stored period, Pt, which is stored by the transmitter, and
• the first payload data frame has a size equal to a stored size, Tt, which is stored by the transmitter,

• estimating (110) a quantity of energy consumed by the transmitter to transmit the first radio signal,

9

• comparing (114) the quantity of energy and a reference quantity of energy,
• updating (118, 120) the stored period, Pt, and the stored size, Tt, on the condition that a difference between the quantity of energy and the reference quantity of energy is greater than a threshold,
• after updating, causing a transmission of a second radio signal carrying a second payload data frame, such that:

> • a time interval separating the transmission of the second radio signal and a transmission of the first radio signal by the transmitter is equal to the stored period, and
> • the second payload data frame has a second size equal to the stored size, Tt,

• **characterized by**:

> • reducing the stored period by a first factor and reducing the stored size by the first factor whenever the difference is greater than the threshold and the quantity of energy is less than the reference quantity of energy, or
> • increasing the stored period by a second factor and increasing the stored size by a second factor whenever the difference is greater than the threshold and when the quantity of energy is greater than the reference quantity of energy.

2. The method as claimed in claim 1, wherein the second factor is equal to the first factor.

3. The method as claimed in any one of claims 1 to 2, further comprising computing (112) the reference quantity of energy from the stored period and a remaining quantity of energy in a battery of the transmitter.

4. The method as claimed in any one of claims 1 to 3, wherein the quantity of energy is estimated (112) from a duration of transmission of the first signal and a transmission power of the first signal.

5. A computer program product comprising program code instructions for the execution of the steps of the method as claimed in any one of claims 1 to 4, when this program is executed by a transmitter (4).

6. Computer-readable medium comprising code instructions for causing a transmitter to perform the method as claimed in any one of claims 1 to 4.

7. A transmitter (4) comprising:

> • a radio communication interface (8),
> • a control unit (12) configured to implement the method as claimed in any one of claims 1 to 4, such that the first radio signal and the second radio signal are transmitted by the radio communication interface.

8. A meter (1) for measuring a consumption of fluid, the meter (1) comprising a transmitter as claimed in claim 7, wherein the first payload data frame or the second payload data frame comprise at least a measurement of consumption of a fluid.

Fig. 1

Fig. 2

Fig. 3

## RÉFÉRENCES CITÉES DANS LA DESCRIPTION

**Documents brevets cités dans la description**

- US 2006270385 A